# EUROPÄISCHE PATENTANMELDUNG

(11) **EP 3 045 950 A1**
(43) Veröffentlichungstag der Anmeldung: **20.07.2016**
(21) Anmeldenummer: 15191222.7
(22) Anmeldetag: 23.10.2015
(51) Int. Cl.: G02B 19/00, G02B 27/09

(54) **BELEUCHTUNGSVORRICHTUNG**

(30) Priorität: 19.01.2015 DE 102015200736
(71) Anmelder: OSRAM GmbH, 80807 München (DE)
(72) Erfinder: Mehl, Oliver, 14167 Berlin (DE); Daniels, Martin, 12045 Berlin (DE)

(57) **Zusammenfassung**

Eine Beleuchtungsvorrichtung (1) weist mindestens eine Primärlicht-Strahleinheit (2a-2e) zur Abstrahlung eines Primärlichtstrahls (Pa-Pe) mit einem länglichen Strahlquerschnitt, eine der Primärlicht-Strahleinheit (2a-2e) nachgeschaltete, den Primärlichtstrahl (Pa-Pe) fokussierende Fokussieroptik (3, 4) und eine der Fokussieroptik (3, 4) nachgeschaltete optische Zielkomponente (5, 6), auf welche der mindestens eine Primärlichtstrahl (Pa-Pe) auftrifft, wobei die Zielkomponente (5, 6) entlang einer Verschiebungsrichtung (z) verschiebbar ist (L), so dass ein Abstand zu der Fokussieroptik (3, 4) einstellbar ist. Die Erfindung ist beispielsweise anwendbar auf Scheinwerfer, z.B. für Fahrzeuge oder eine Effektbeleuchtung, Bildprojektoren und/oder Endoskope.

## Beschreibung

Die Erfindung betrifft eine Beleuchtungsvorrichtung, aufweisend mindestens eine Primärlicht-Strahleinheit zur Abstrahlung eines Primärlichtstrahls mit einem länglichen Strahlquerschnitt, eine der Primärlicht-Strahleinheit nachgeschaltete, den Primärlichtstrahl fokussierende Fokussieroptik und eine der Fokussieroptik nachgeschaltete optische Zielkomponente, auf welches der Primärlichtstrahl auftrifft. Die Erfindung ist beispielsweise anwendbar auf Scheinwerfer, z.B. für Fahrzeuge oder eine Effektbeleuchtung, auf Bildprojektoren und/oder auf Endoskope.

Es ist eine Primärlicht-Strahleinheit mit einer großen Zahl von z.B. matrixartig angeordneten Halbleiterlichtquellen wie LED-Chips oder Laserdioden bekannt. Dabei wird zunächst ein von einer einzelnen Halbleiterlichtquelle abgestrahlter Primärlichtstrahl kollimiert, dann ein aus den kollimierten Einzellichtstrahlen zusammengesetztes Gesamtstrahlenbündel mit Hilfe eines optischen Teleskopes im Durchmesser angepasst, danach das Gesamtstrahlenbündel mit einer Strahlformungsoptik aufbereitet und in einem letzten Schritt auf einen Leuchtstoff eingestrahlt. Insbesondere die Strahlformung ist technisch aufwendig, wenn auf dem Leuchtstoff ein homogenes Pumplichtprofil mit einheitlicher Leistungsdichte (z.B. als sog. "Top-Hat Profile") gewünscht wird.

Aus der Lasertechnik sind sog. Laserbarren oder "Laser Bars" bekannt, bei denen auf einem einzelnen Chip mehrere Emitter in Reihe nebeneinander angeordnet sind. Mehrere dieser Barren lassen sich horizontal oder vertikal zu sog. Laserstapeln oder "Laserstacks" kombinieren. Eine asymmetrische Querschnittsform eines von einem Laserbarren abgestrahlten Lichtstrahls im Nahfeld (von typischerweise 1 µm x 10 mm) und im Fernfeld (mit einem Spreizungswinkel typisch 35° x 10° Vollwinkel) kann durch geeignete Mikrooptiken kollimiert und symmetrisiert werden.

Es ist die Aufgabe der vorliegenden Erfindung, die Nachteile des Standes der Technik zumindest teilweise zu überwinden und insbesondere eine Beleuchtungsvorrichtung, bereitzustellen, deren Primärlichtstrahl(en) und damit deren Lichtabstrahlmuster mit einfachen Mitteln verbessert formbar ist.

Diese Aufgabe wird gemäß den Merkmalen der unabhängigen Ansprüche gelöst. Bevorzugte Ausführungsformen sind insbesondere den abhängigen Ansprüchen entnehmbar.

Die Aufgabe wird gelöst durch eine Beleuchtungsvorrichtung, aufweisend mindestens eine Primärlicht-Strahleinheit zur Abstrahlung eines Primärlichtstrahls mit einem länglichen Strahlquerschnitt, eine der Primärlicht-Strahleinheit nachgeschaltete, den Primärlichtstrahl fokussierende Optik (im Folgenden ohne Beschränkung der Allgemeinheit als "Fokussieroptik" bezeichnet) und eine der Fokussieroptik nachgeschaltete optische Zielkomponente, auf welche der Primärlichtstrahl auftrifft, wobei ein Abstand der Zielkomponente zu der Fokussieroptik einstellbar ist.

Obwohl die Erfindung auch Verfahrensaspekte umfasst, wird in der nachstehenden Beschreibung nicht immer im Einzelnen zwischen Aspekten hinsichtlich der Beleuchtungsvorrichtung und Aspekten hinsichtlich eines Verfahrens zum Betreiben der Beleuchtungsvorrichtung unterschieden; jedenfalls implizit ist die Offenbarung hinsichtlich beider Aspekte und Anspruchskategorien zu lesen.

Durch eine Einstellung oder Änderung des Abstands kann der auf der Zielkomponente erzeugte Leuchtfleck des Primärlichts gespreizt werden und dadurch insbesondere seine Größe und/oder sein Aspektverhältnis einfach variiert werden. Jedenfalls kann durch das Verschieben der Zielkomponente so, dass ein Abstand zu der Fokussieroptik eingestellt wird, die Leuchtdichteverteilung des auf der Zielkomponente durch die mindestens eine Primärlicht-Strahleinheit erzeugten Leuchtflecks verändert werden. Insbesondere kann bei mehreren Primärlicht-Strahleinheiten die Leuchtdichteverteilung des Leuchtflecks durch gezieltes Verschieben der Zielkomponente aus dem Fokus der Fokussieroptik heraus homogener gemacht werden. Es ist ferner eine Beleuchtungsvorrichtung mit einer geringen Zahl von optischen Komponenten auf kleinem Bauraum bereitstellbar, die zudem kostengünstig hergestellt werden kann und geringe Anforderungen an eine Justage stellt.

Die Beleuchtungsvorrichtung mag beispielsweise ein Modul, eine Lampe oder eine Leuchte sein. Die Beleuchtungsvorrichtung mag insbesondere ein Scheinwerfer oder ein Teil davon sein. Der Scheinwerfer mag z.B. zur Fahrzeugbeleuchtung (beispielsweise als Frontscheinwerfer), zur Effektbeleuchtung(beispielsweise als Bühnenscheinwerfer), zur Bildprojektion (z.B. als eigenständiger portabler Bildprojektor oder als in ein Smartphone o.ä. integrierter Bildprojektor) und/oder für einen Medizinbereich (z.B. als Endoskop) verwendet werden.

Unter einer Primärlicht-Strahleinheit mag insbesondere eine Komponente der Beleuchtungsvorrichtung verstanden werden, die Primärlicht einer einheitlichen spektralen Zusammensetzung, insbesondere einer gleichen Wellenlänge, abstrahlt. Weist die Primärlicht-Strahleinheit mehrere einzelne Lichtquellen, insbesondere Halbleiterlichtquellen wie LEDs oder Laserdioden, auf, können diese insbesondere Licht mit gleicher spektraler Zusammensetzung, z.B. blaues Licht, abstrahlen. Die Primärlicht-Strahleinheit mag insbesondere blaues Licht mit einer Wellenlänge in einem Bereich von ca. 440 nm bis ca. 465 nm abstrahlen. Die Primärlicht-Strahleinheit mag aber z.B. auch nur eine längliche Emissionsfläche aufweisen, z.B. eines OLEDs.

Der Strahlquerschnitt des von der Primärlicht-Strahleinheit abgestrahlten Primärlichts weist eine wesentlich größere Breite als Höhe auf. Insbesondere mag unter einem länglichen Strahlquerschnitt ein Strahlquerschnitt verstanden werden, der ein Aspektverhältnis einer Breite zu einer Höhe von mindestens 2:1 aufweist, insbesondere von mindestens 10:1, insbesondere von mindestens 100:1, insbesondere von mindestens 1.000:1, insbesondere von mindestens 5.000:1, insbesondere von mindestens 10.000:1, insbesondere von mindestens 15.000:1, insbesondere von mindestens 20.000:1. Der Strahlquerschnitt mag insbesondere ein Aspektverhältnis von 20.000:1, insbesondere von 15.000:1, nicht überschreiten.

Der Strahlquerschnitt mag insbesondere eine rechteckige oder eine ovale Form aufweisen. Er mag insbesondere einem "Top-Hat Profil" entsprechen.

Die den Primärlichtstrahl fokussierende Fokussieroptik bewirkt, dass der Primärlichtstrahl - bis auf den auf der optischen Achse laufenden Strahlanteil - hinter der Fokussieroptik zu der optischen Achse angewinkelt verläuft, so dass der Primärlichtstrahl an seinem Brennpunkt oder Brennfleck die geringste Ausdehnung aufweist und mit steigendem Abstand zu dem Brennpunkt einen entsprechend größeren Strahlquerschnitt aufweist. Die Fokussieroptik mag einteilig oder mehrteilig (z.B. mit zwei oder mehr optisch in Reihe geschalteten optischen Elementen) ausgebildet sein. Die Fokussieroptik mag mindestens eine Mikrooptik aufweisen, z.B. ein Mikrolinsen-Array.

Der Bereich, an dem der Primärlichtstrahl auf der Zielkomponente auftreffen und ihn entsprechend beleuchten kann, mag im Folgenden auch als "Primärlicht-Auftreffbereich" oder auch einfach nur als "Auftreffbereich" bezeichnet werden. Die Form des Auftreffbereichs ist grundsätzlich nicht beschränkt und mag z.B. eben und/oder gekrümmt sein. Auch ist die Lage oder Ausrichtung des Auftreffbereichs grundsätzlich nicht beschränkt und mag z.B. senkrecht und/oder schräg zu dem einfallenden Primärlichtstrahl und/oder zu einer optischen Achse der Fokussieroptik ausgerichtet sein.

Der auf den Auftreffbereich auftreffende Primärlichtstrahl erzeugt dort ein Lichtmuster, das im Folgenden als "Leuchtfleck" bezeichnet wird. Ein Rand des Leuchtflecks mag insbesondere durch eine Intensität des auf den Auftreffbereich auftreffenden Primärlichtstrahls von mindestens 5% der maximalen Intensität des Primärlichts an dem Leuchtfleck definiert sein, d.h., dass der Leuchtfleck alle Bereiche auf dem Auftreffbereich umfasst, die mindestens 5% der maximalen Intensität des Leuchtflecks aufweisen. Es ist eine Weiterbildung, dass der Rand des Leuchtflecks durch mindestens 10%, insbesondere mindestens 15%, insbesondere mindestens 20%, insbesondere mindestens 30%, insbesondere mindestens 40%, insbesondere mindestens 50%, insbesondere mindestens 60%, insbesondere mindestens 70%, insbesondere mindestens 80%, insbesondere mindestens 85%, insbesondere mindestens 90%, insbesondere mindestens 95%, insbesondere mindestens 98%, der maximalen Intensität des Primärlichts definiert ist.

Es ist eine zur einfachen Einstellung und Beibehaltung der Querschnittsform vorteilhafte Weiterbildung, dass die Zielkomponente entlang der optischen Achse der Fokussieroptik verschiebbar ist, die Verschiebungsrichtung also mit der optischen Achse zusammenfällt. Insbesondere mag die optische Achse durch die Zielkomponente verlaufen.

Es ist eine Ausgestaltung, dass die Fokussieroptik dazu eingerichtet ist, ein Aspektverhältnis eines von der mindestens einen Primärlicht-Strahleinheit abgestrahlten Primärlichtstrahls zu verändern, d.h. wahlweise zu vergrößern und/oder zu verringern. So können üblicherweise gewünschte Aspektverhältnisse eines Leuchtflecks auf dem Auftreffbereich der Zielkomponente besser angenähert werden und/oder eine gleichmäßigere Intensitätsverteilung des Leuchtflecks erreicht werden. Es ist insbesondere zur Bildprojektion vorteilhaft, wenn ein Leuchtfleck des Primärlichts auf der Zielkomponente auf ein Aspektverhältnis von 16:9 oder 4:3 einstellbar ist. Das Aspektverhältnis der Lichtverteilung kann insbesondere durch eine Fokussierung bzw. Defokussierung verändert werden.

Es ist noch eine Ausgestaltung, dass die Zielkomponente mindestens ein strahlformendes optisches Durchlichtelement (oder "Durchlichtoptik") aufweist oder ist, z.B. mindestens eine Linse, mindestens einen Diffusor und/oder mindestens einen Kollimator. Dies ermöglicht eine besonders kompakte und einfach aufgebaute Beleuchtungsvorrichtung.

Es ist eine weitere Ausgestaltung, dass die Zielkomponente mindestens einen Reflektor aufweist. Dies ermöglicht eine besonders vielfältige Formung des Lichtstrahls.

Es ist eine Weiterbildung, dass der Reflektor ein Mikrospiegelaktor ist, z. B. ein Mikrospiegelscanner oder ein Flächenlichtmodulator. So lässt sich ein besonders vielgestaltiges Lichtabstrahlmuster erzeugen, und zwar auch ein einfach dynamisch änderbares Lichtabstrahlmuster.

Es ist noch eine weitere Ausgestaltung, dass die Zielkomponente ein Lichtleiter ist bzw. einen Lichtleiter aufweist, z.B. eine Glasfaser oder ein Lichtleitstab. Der Leuchtfleck wird dabei auf eine als Auftreffbereich dienende Lichteinstrahlfläche des Lichtleiters gerichtet, z.B. auf eine Stirnseite einer Glasfaser oder eines Lichtleitstabs. Diese Ausgestaltung lässt sich insbesondere günstig anwenden auf Endoskope als Beleuchtungsvorrichtungen, insbesondere mit medizinischer oder industrieller Anwendung. Der Lichtleiter mag das Licht in sich mittels innerer Totalreflexion und/oder mittels einer äußeren reflektierenden Beschichtung leiten.

Es ist ferner eine Ausgestaltung, dass die Zielkomponente im Bereich eines durch die mindestens eine Primärlicht-Strahleinheit erzeugbaren Leuchtflecks (d.h., an dem Auftreffbereich) mindestens einen Leuchtstoff (d.h., einen oder mehrere Leuchtstoffe) aufweist, insbesondere in einem gesamten Bereich des Leuchtflecks. So lässt sich eine variable Fläche des Leuchtstoffs bestrahlen, was eine entsprechend große Lichtabstrahlfläche von dem Leuchtstoff bedingt. Eine solche Beleuchtungsvorrichtung mag auch als LARP ("Laser Activated Remote Phosphor")-Vorrichtung bezeichnet oder angesehen werden.

Leuchtstoff ist dazu geeignet, einfallendes Primärlicht zumindest teilweise in Sekundärlicht unterschiedlicher Wellenlänge umzuwandeln oder zu konvertieren. Bei Vorliegen mehrerer Leuchtstoffe können diese Sekundärlicht von zueinander unterschiedlicher Wellenlänge erzeugen. Die Wellenlänge des Sekundärlichts mag länger sein (sog. "Down Conversion") oder kürzer sein (sog. "Up Conversion") als die Wellenlänge des Primärlichts. Beispielsweise mag blaues Primärlicht mittels eines Leuchtstoffs in grünes, gelbes, orangefarbenes oder rotes Sekundärlicht umgewandelt werden. Bei einer nur teilweisen Wellenlängenumwandlung oder Wellenlängenkonversion wird von dem Leuchtstoff eine Mischung aus Sekundärlicht und nicht umgewandeltem Primärlicht abgestrahlt, die als Nutzlicht dienen kann. Beispielsweise mag weißes Nutzlicht aus einer Mischung aus blauem, nicht umgewandeltem Primärlicht und gelbem Sekundärlicht erzeugt werden. Jedoch ist auch eine Vollkonversion möglich, bei der das Nutzlicht entweder nicht mehr oder zu einem nur vernachlässigbaren Anteil in dem Nutzlicht vorhanden ist. Ein Umwandlungsgrad hängt beispielsweise von einer Dicke und/oder einer Leuchtstoffkonzentration ab. Bei Vorliegen mehrerer Leuchtstoffe können aus dem Primärlicht Sekundärlichtanteile unterschiedlicher spektraler Zusammensetzung erzeugt werden, z.B. gelbes und rotes Sekundärlicht. Das rote Sekundärlicht mag beispielsweise dazu verwendet werden, dem Nutzlicht einen wärmeren Farbton zu geben, z.B. sog. "warm-weiß". Bei Vorliegen mehrerer Leuchtstoffe mag mindestens ein Leuchtstoff dazu geeignet sein, Sekundärlicht nochmals wellenlängenumzuwandeln, z.B. grünes Sekundärlicht in rotes Sekundärlicht. Ein solches aus einem Sekundärlicht nochmals wellenlängenumgewandeltes Licht mag auch als "Tertiärlicht" bezeichnet werden. Der mindestens eine Leuchtstoff mag als eigenständiger, selbsttragender Leuchtstoffkörper oder als Leuchtstoffschicht vorliegen. Falls er als Schicht (oder Lage) vorliegt, mag er insbesondere an einer dem Primärlichtstrahl zugewandten Oberfläche der Zielkomponente angeordnet sein.

Der mindestens eine Leuchtstoff mag grundsätzlich in einer transmittiven Anordnung oder in einer reflektiven Anordnung vorliegen.

Es ist eine Weiterbildung, dass eine Leuchtstoffschicht auf einer als Auftreffbereich dienenden oder den Auftreffbereich aufweisenden Lichteintrittsfläche eines Lichtleiters angebracht ist. Die Lichteintrittsfläche mag insbesondere kreisrund, oval oder drehsymmetrisch mehreckig, z.B. quadratisch, sein.

Es ist auch eine Ausgestaltung, dass die Zielkomponente mehrere Auftreffbereiche aufweist, die abwechselnd in den Primärlichtstrahl der mindestens einen Primärlicht-Strahleinheit einbringbar sind. Dadurch kann eine noch größere Variation des von der Beleuchtungsvorrichtung abstrahlbaren Lichtabstrahlmusters erreicht werden. Zur praktischen Umsetzung dieser Ausgestaltung mag die Zielkomponente drehbar sein und z.B. mehrere Auftreffbereiche aufweisen, die durch eine jeweilige Winkeleinstellung der Zielkomponente in den Primärlichtstrahl hineindrehbar und wieder aus dem Primärlichtstrahl herausdrehbar sind. Diese Ausgestaltung ist insbesondere für eine Effektbeleuchtung (z.B. einen Bühnenscheinwerfer o.ä.) vorteilhaft einsetzbar. Dadurch lassen sich also ein oder mehrere Auftreffbereiche abwechselnd "einschalten" und "ausschalten". Die mehreren Auftreffbereiche mögen unterschiedliche optische Funktionen aufweisen, z.B. unterschiedliche Leuchtstoffe aufweisen, als Diffusor oder als Blende dienen usw.

Dass die Beleuchtungsvorrichtung mindestens eine Primärlicht-Strahleinheit aufweist, umfasst insbesondere, dass die Beleuchtungsvorrichtung mehrere Primärlicht-Strahleinheiten aufweist. Von diesen Primärlicht-Strahleinheiten werden jeweilige Primärlichtstrahlen abgestrahlt. Die Fokussieroptik ist insbesondere dazu eingerichtet, die Primärlichtstrahlen auf den gleichen Brennfleck oder Brennpunkt zu fokussieren. Allgemein brauchen sich die Primärlichtstrahlen (z.B. abhängig von ihrem Abstand zu der Fokussieroptik und damit typischerweise auch von dem Brennfleck) nicht zu überlappen, mögen sich teilweise überlappen oder mögen sich praktisch vollständig überlappen (z.B. im Brennfleck).

Der ("Gesamt-")Leuchtfleck auf dem Auftreffbereich mag bei mehreren Primärlicht-Strahleinheiten zumindest einer Kombination der ("Einzel"-)Leuchtflecke der einzelnen Primärlicht-Strahleinheiten entsprechen. Es ist eine Weiterbildung, dass der Auftreffbereich der Zielkomponente in einem Bereich oder Abschnitt in Verschiebungsrichtung verschiebbar ist, in dem sich alle Einzel-Leuchtflecke überlappen. Als Gesamt-Leuchtfleck mag auch ein Inhalt eines um die Einzel-Leuchtflecke herumgelegten (z.B. rechteckigen) Rahmens verstanden werden. Die Seiten des Rahmens bestimmen dann das Aspektverhältnis des Gesamt-Leuchtflecks.

Es ist auch noch eine Ausgestaltung, dass die Beleuchtungsvorrichtung mehrere Primärlicht-Strahleinheiten aufweist, die einzeln oder gruppenweise aktivierbar und deaktivierbar sind. Dies ermöglicht eine noch vielfältigere Einstellung des Gesamt-Leuchtflecks.

Es ist außerdem eine Ausgestaltung, dass die Beleuchtungsvorrichtung mehrere Primärlicht-Strahleinheiten aufweist, die Primärlichtstrahlen gleicher spektraler Zusammensetzung abstrahlen, z.B. Licht gleicher Farbe, z.B. blaues Licht. Dies ermöglicht eine Erzeugung eines besonders gleichförmigen oder homogenen Leuchtflecks und damit auch Lichtabstrahlmuster der Beleuchtungsvorrichtung.

Es ist zudem eine Ausgestaltung, dass die Beleuchtungsvorrichtung mehrere Primärlicht-Strahleinheiten aufweist, von denen mindestens zwei Primärlicht-Strahleinheiten Primärlichtstrahlen unterschiedlicher spektraler Zusammensetzung, insbesondere unterschiedlicher Farbe, abstrahlen. Dies ermöglicht eine noch vielfältigere Variation des von der Beleuchtungsvorrichtung abstrahlbaren Lichtabstrahlmusters, insbesondere eine farbliche Variation. Beispielsweise mag mindestens ein Laserbarren blaues Primärlicht abstrahlen, mindestens ein anderer Laserbarren rotes, orangefarbenes, gelbes oder grünes Primärlicht usw.

Es ist zudem noch eine Ausgestaltung, dass die zumindest eine Primärlicht-Strahleinheit mehrere in gerader Reihe angeordnete Einzellichtquellen aufweist, die einzeln oder gruppenweise aktivierbar und deaktivierbar sind. Dies ermöglicht eine noch vielfältigere Variation des von der Beleuchtungsvorrichtung abstrahlbaren Lichtabstrahlmusters, insbesondere eine lokale farbliche Variation.

Es ist darüber hinaus eine Ausgestaltung, dass die mindestens eine Primärlicht-Strahleinheit mindestens einen Laserbarren aufweist. Sie mag insbesondere mehrere Laserbarren aufweisen, die parallel zueinander angeordnet sind, insbesondere in einer gemeinsamen Ebene.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit den Zeichnungen näher erläutert wird. Dabei können zur Übersichtlichkeit gleiche oder gleichwirkende Elemente mit gleichen Bezugszeichen versehen sein.

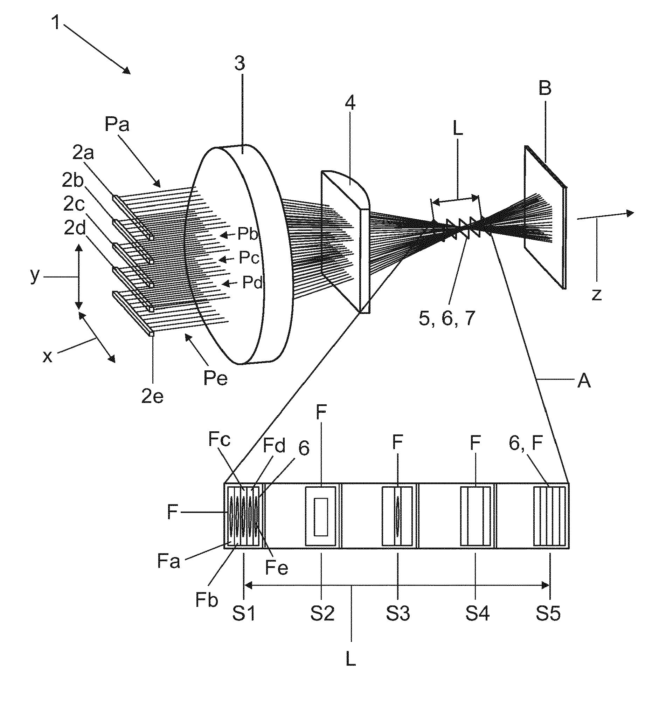

Die einzige Figur zeigt in einer Ansicht von schräg hinten Komponenten einer Beleuchtungsvorrichtung 1. Die Beleuchtungsvorrichtung 1 weist mehrere (hier: fünf) Primärlicht-Strahleinheiten in Form von zueinander in einer Ebene parallel zueinander angeordneten Laserbarren 2a bis 2e auf. Die hier beispielhaft horizontal eingezeichneten Laserbarren 2a bis 2e weisen jeweils mehrere Lichtquellen in Form von (z.B. neunzehn) Laserdioden (o. Abb.) auf, die äquidistant in Längsrichtung angeordnet sind und Primärlicht von z.B. blauer Farbe abstrahlen, und zwar hier in einer zu einer z-Richtung parallelen Hauptabstrahlrichtung. Das von den Laserdioden abgestrahlte Primärlicht bildet für jeden der Laserbarren 2a bis 2e einen Primärlichtstrahl Pa, Pe mit einem länglichen Strahlquerschnitt. Die Primärlichtstrahlen Pa, Pe weisen jeweils ein sehr hohes Aspektverhältnis von Breite (in x-Richtung) zu Höhe (in y-Richtung) auf. Die Laserbarren 2a bis 2e und damit auch die zugehörigen fünf Primärlichtstrahlen Pa bis Pe sind in einer vertikalen Richtung gleichbeabstandet. Die Laserbarren 2a bis 2e mögen in einer Variante nur gemeinsam ein- oder ausschaltbar bzw. aktivierbar oder deaktivierbar sein, in einer anderen Variante auch einzeln oder gruppenweise aktivierbar oder deaktivierbar sein.

Den Laserbarren 2a bis 2e ist eine zweiteilige Fokussieroptik 3, 4 nachgeschaltet, und zwar zunächst eine sphärisch konvex-plane Linse 3 zum Fokussieren der Primärlichtstrahlen Pa bis Pe in Richtung einer optischen Achse z der Linse 3, welche mit der z-Richtung zusammenfällt. Dadurch werden vor allem die Breite der Primärlichtstrahlen Pa bis Pe als auch deren Abstände zueinander verringert. Der Linse 3 ist eine plan - zylindrisch konvexe Linse 4 nachgeschaltet, welche vor allem die Breite der Primärlichtstrahlen Pa bis Pe verringert. Dadurch kann das Aspektverhältnis sowohl eines einzelnen Primärlichtstrahls Pa bis Pe als auch der Gruppe der Primärlichtstrahlen Pa bis Pe erheblich verringert werden. Die optischen Achsen z der Linsen 3 und 4 sind insbesondere identisch und mögen z.B. auf einer Höhe des mittleren Laserbarrens 2c liegen.

Jedoch kann beispielsweise auch eine mehr als zweiteilige Fokussieroptik verwendet werden (o. Abb.). So mag eine dreiteilige Fokussieroptik verwendet werden, bei der sich zusätzlich zu den Linsen 3, 4 vor jedem der Laserbarren 2a bis 2e eine jeweilige Zylinderlinse (o. Abb.) befindet. Die Zylinderlinse mag eine FAC ("Fast Axis Collimation")-Linse zur Kollimation der sog. "Fast Axis" sein.

Die optische Achse z durchläuft ferner eine der Fokussieroptik 3, 4 nachgeschaltete Zielkomponente 5, von der hier nur ein beispielhaft planer, rechteckiger und senkrecht zur optischen Achse z ausgerichteter Auftreffbereich 6 dargestellt ist. Der Auftreffbereich 6 stellt denjenigen zusammenhängenden Bereich der Zielkomponente 5 dar, auf welchen die Primärlichtstrahlen Pa bis Pe auftreffen können. Der Auftreffbereich 6 mag beispielsweise eine Größe von 2 mm x 1 mm aufweisen.

Der Auftreffbereich 6 ist mit der Zielkomponente 5 entlang der optischen Achse z als eine Verschiebungsrichtung um eine vorbestimmte Länge entlang eines Verschiebungsabschnitts L verschiebbar. Sein Abstand entlang der optischen Achse z zu der Fokussieroptik 3, 4 ist also einstellbar. Dies kann beispielsweise mittels eines elektromotorischen oder aktorischen Verstellantriebs (o. Abb.) erreicht werden, der die Zielkomponente entsprechend verschiebt. Ein Brennpunkt oder Brennfleck der Fokussieroptik 3, 4 liegt in dem Verschiebungsabschnitt L, insbesondere in der Mitte des Verschiebungsabschnitts L.

Die auf dem Auftreffbereich 6 erzeugten Einzel-Leuchtflecke Fa bis Fe der jeweiligen Primärlichtstrahlen Pa bis Pe an unterschiedlichen Positionen S1 bis S5 des Verschiebungsabschnitts L sind in einem Teilbild A stark schematisiert nebeneinander gezeigt. Die Einzel-Leuchtflecke Fa bis Fe entsprechen dem dortigen Strahlquerschnitt der zugehörigen Primärlichtstrahlen Pa bis Pe. Die mittlere Position S3 entspricht dem Ort des Brennflecks der Fokussieroptik 3, 4. Für eine Position S2 ist zudem ein Gesamt-Leuchtfleck F eingezeichnet, der als ein Inhalt eines um die Einzel-Leuchtflecke Fa bis Fe herumgelegten, rechteckigen Rahmens definiert ist. In den beiden äußeren Positionen S1 und S5 füllt der Gesamt-Leuchtfleck F den gesamten Auftreffbereich 6 aus bzw. entspricht diesem.

An der am nächsten zu der Fokussieroptik 3, 4 beabstandeten Position S1 sind die Einzel-Leuchtflecke Fa bis Fe zueinander leicht beabstandet. Wird der Auftreffbereich 6 zu der nächsten, weiter von der Fokussieroptik 3, 4 beabstandeten Position S5 in Richtung S3 verschoben, überlappen sich die Einzel-Leuchtflecke Fa bis Fe so, dass ein Gesamt-Leuchtfleck F ein größeres Aspektverhältnis erhält und also schmaler wird. Die Breite (in x-Richtung) und Höhe (in y-Richtung) der Einzel-Leuchtflecke Fa bis Fe wird dadurch hingegen praktisch nur geringfügig beeinflusst. An der Position S3 - die dem Brennfleck entspricht - fallen alle Einzel-Leuchtflecke Fa bis Fe aufeinander. An der Position S4 werden die Einzel-Leuchtflecke Fa bis Fe wieder auseinandergespreizt und sind an der Position S5 wieder leicht voneinander beabstandet. Durch ein Verschieben der Zielkomponente 5 und damit auch des Auftreffbereichs 6 kann also ein Aspektverhältnis des Gesamt-Leuchtflecks F auf einfache Weise erheblich variiert werden. Der Auftreffbereich 6 kann grundsätzlich schrittweise oder kontinuierlich verschoben werden.

In dieser Figur ist der Strahlengang der Primärlichtstrahlen Pa bis Pe hinter dem Auftreffbereich 6 so dargestellt, als ob der Auftreffbereich 6 die Primärlichtstrahlen Pa bis Pe nicht formt oder ablenkt, bis sie auf eine gedachte oder tatsächlich vorhandene Bildebene B treffen. In der Praxis wird die Zielkomponente 5 jedoch zumeist eine Strahlformung und/oder Strahlablenkung bewirken.

So mag die Zielkomponente 5 mindestens ein optisches Durchlichtelement, z.B. mindestens eine Linse, ein Kollimator oder ein Diffusor sein. In einem speziellen Fall eines Durchlichtelements mag dieses als ein Lichtleiter ausgebildet sein, z.B. für endoskopische Anwendungen.

Alternativ mag die Zielkomponente 5 mindestens einen Reflektor aufweisen, beispielsweise einen Mikrospiegelaktor. Insbesondere für den Fall des mindestens einen Reflektors mag der Auftreffbereich 6 auch schräg zu der optischen Achse z angeordnet sein.

Der Auftreffbereich 6 mag insbesondere Leuchtstoff aufweisen, z.B. mit einer Leuchtstoffschicht 7 oder einem Leuchtstoffplättchen belegt sein, die bzw. das auf der Zielkomponente 5 aufgebracht ist. Die Zielkomponente 5 mag alternativ als ein selbsttragender Leuchtstoffkörper ausgebildet sein. Die Leuchtstoffschicht 7 ist hier in einer transmittiven Anordnung gezeigt, bei der die Primärlichtstrahlen Pa bis Pe auf einer ersten Flachseite auftreffen, das zumindest teilweise wellenlängenumgewandelte Nutzlicht jedoch von der dazu abgewandten zweiten Flachseite abgestrahlt wird. Hier werden beispielsweise die auf die Leuchtstoffschicht 7 auftreffenden blauen Primärlichtstrahlen Pa bis Pe teilweise in gelbes Sekundärlicht umgewandelt, so dass das in Richtung der Bildebene B abgestrahlte Nutzlicht einer blau-gelben bzw. weißen Mischung entspricht. Die Leuchtstoffschicht 7 mag auch noch weitere Leuchtstoffe aufweisen, z.B. blau-rot umwandelnden Leuchtstoff, um dem Nutzlicht einen zusätzlichen Rotanteil zur Erzeugung eines "warm-weißen" Farbeindrucks zu geben.

Ein zusätzlicher Farbanteil des Nutzlichts mag aber auch durch einen Primärlichtstrahl Pa, Pe erzeugt werden, der ein optisches Spektrum aufweist, das die Leuchtstoffschicht 7 nicht anregt und daher spektral unverändert durch die Leuchtstoffschicht 7 hindurchläuft, z.B. ein roter oder ein grüner Primärlichtstrahl Pa, Pe. Die Leuchtstoffschicht 7 wirkt für diese Farben als Diffusor.

Ist diese Beleuchtungsvorrichtung 1 als oder zur Verwendung mit einem Bildprojektor vorgesehen, ist es besonders vorteilhaft, wenn das Aspektverhältnis des Gesamt-Leuchtflecks F zumindest ungefähr im Bereich von 16:9 oder 4:3 einstellbar ist.

Der Auftreffbereich 6 mag in einer Variante einer von mehreren Auftreffbereichen der Zielkomponente 5 sein, die abwechselnd in die Primärlichtstrahlen Pa bis Pe einbringbar sind. Die Zielkomponente 5 mag dazu beispielsweise ein parallel zu der optischen Achse z drehbares Rad sein, auf dem auf einem ringförmigen Sektor mehrere Auftreffbereiche in Umfangsrichtung getrennt voneinander angeordnet sind, z.B. wie ein Farbrad, wobei die Auftreffbereiche insbesondere für eine beliebige Zeit im Strahlengang der Primärlichtstrahlen Pa bis Pe verbleiben können. Die Auftreffbereiche können dann durch eine Einstellung eines Drehwinkels der Zielkomponente um ihre Drehachse ausgewählt werden.

Obwohl die Erfindung im Detail durch die gezeigten Ausführungsbeispiele näher illustriert und beschrieben wurde, so ist die Erfindung nicht darauf eingeschränkt und andere Variationen können vom Fachmann hieraus abgeleitet werden, ohne den Schutzumfang der Erfindung zu verlassen.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Auch kann eine Zahlenangabe genau die angegebene Zahl als auch einen üblichen Toleranzbereich umfassen, solange dies nicht explizit ausgeschlossen ist.

### Bezugszeichen

- 1: Beleuchtungsvorrichtung
- 2a-2e: Laserbarren
- 3: Sphärisch konvex-plane Linse
- 4: Plan-zylindrisch konvexe Linse
- 5: Zielkomponente
- 6: Auftreffbereich
- 7: Leuchtstoffschicht
- A: Teilbild
- B: Bildebene
- F: Gesamtleuchtfleck
- Fa-Fe: Einzel-Leuchtfleck
- L: Verschiebungsabschnitt
- Pa-Pe: Primärlichtstrahl
- S1: äußere Position
- S2: Position
- S3: mittlere Position
- S5: äußere Position
- Z: optische Achse

## Patentansprüche

1. Beleuchtungsvorrichtung (1), aufweisend
- mindestens eine Primärlicht-Strahleinheit (2a-2e) zur Abstrahlung eines Primärlichtstrahls (Pa-Pe) mit einem länglichen Strahlquerschnitt,
- eine der Primärlicht-Strahleinheit (2a-2e) nachgeschaltete, den Primärlichtstrahl (Pa-Pe) fokussierende Fokussieroptik (3, 4) und
- eine der Fokussieroptik (3, 4) nachgeschaltete optische Zielkomponente (5, 6), auf welche der mindestens eine Primärlichtstrahl (Pa-Pe) auftrifft,
wobei
- die Zielkomponente (5, 6) entlang einer Verschiebungsrichtung (z) verschiebbar ist (L), so dass ein Abstand zu der Fokussieroptik (3, 4) einstellbar ist.

2. Beleuchtungsvorrichtung (1) nach Anspruch 1, wobei die Fokussieroptik (3, 4) dazu eingerichtet ist, ein Aspektverhältnis eines von der mindestens einen Primärlicht-Strahleinheit (2a-2e) abgestrahlten Primärlichtstrahls (Pa-Pe) zu verändern.

3. Beleuchtungsvorrichtung (1) nach einem der Ansprüche 1 oder 2, wobei die Zielkomponente (5, 6) mindestens ein optisches Durchlichtelement aufweist.

4. Beleuchtungsvorrichtung (1) nach Anspruch 3, wobei die Zielkomponente (5, 6) ein Lichtleiter ist.

5. Beleuchtungsvorrichtung (1) nach einem der Ansprüche 1 oder 2, wobei die Zielkomponente mindestens einen Reflektor aufweist.

6. Beleuchtungsvorrichtung (1) nach einem der vorhergehenden Ansprüche, wobei die Zielkomponente (5, 6) im Bereich eines durch die mindestens eine Primärlicht-Strahleinheit (2a-2e) erzeugbaren Leuchtflecks (F, Fa-Fe) Leuchtstoff (6) aufweist.

7. Beleuchtungsvorrichtung (1) nach einem der vorhergehenden Ansprüche, wobei die Zielkomponente (5, 6) mehrere Auftreffbereiche aufweist, die abwechselnd in den Primärlichtstrahl (Pa-Pe) der mindestens einen Primärlicht-Strahleinheit (2a-2e) einbringbar sind.

8. Beleuchtungsvorrichtung (1) nach einem der vorhergehenden Ansprüche, wobei die Beleuchtungsvorrichtung (1) mehrere Primärlicht-Strahleinheiten (2a-2e) aufweist, die einzeln oder gruppenweise aktivierbar und deaktivierbar sind.

9. Beleuchtungsvorrichtung (1) nach einem der vorhergehenden Ansprüche, wobei die Beleuchtungsvorrichtung (1) mehrere Primärlicht-Strahleinheiten (2a-2e) aufweist, die Primärlichtstrahlen (Pa-Pe) gleicher spektraler Zusammensetzung abstrahlen.

10. Beleuchtungsvorrichtung (1) nach einem der vorhergehenden Ansprüche, wobei die Beleuchtungsvorrichtung (1) mehrere Primärlicht-Strahleinheiten (2a-2e) aufweist, von denen mindestens zwei Primärlicht-Strahleinheiten (2a-2e) Primärlichtstrahlen (Pa-Pe) unterschiedlicher spektraler Zusammensetzung abstrahlen.

11. Beleuchtungsvorrichtung (1) nach einem der vorhergehenden Ansprüche, wobei zumindest eine Primärlicht-Strahleinheit (2a-2e) mehrere in Reihe angeordnete Einzellichtquellen aufweist, die einzeln oder gruppenweise aktivierbar und deaktivierbar sind.

12. Beleuchtungsvorrichtung (1) nach einem der vorhergehenden Ansprüche, wobei die mindestens eine Primärlicht-Strahleinheit (2a-2e) mindestens einen Laserbarren aufweist.

13. Verfahren zum Betreiben einer Beleuchtungsvorrichtung (1) nach einem der vorstehenden Ansprüche, bei dem die Zielkomponente (5, 6) entlang der Verschiebungsrichtung (z) verschoben wird (L), so dass ein Abstand zu der Fokussieroptik (3, 4) eingestellt und damit die Leuchtdichteverteilung des auf der Zielkomponente (5, 6) durch die mindestens eine Primärlicht-Strahleinheit (2a-2e) erzeugten Leuchtflecks (F, Fa-Fe) verändert wird.

14. Verfahren zum Betreiben einer Beleuchtungsvorrichtung (1) nach Anspruch 13 mit mehreren Primärlicht-Strahleinheiten (2a-2e), bei dem die Zielkomponente (5, 6) aus dem Fokus der Fokussieroptik (3, 4) heraus verschoben (S5) und dadurch die Leuchtdichteverteilung des Leuchtflecks (F) homogener wird.
